# FASCICULE DE BREVET EUROPEEN

(11) **EP 3 237 832 B1**
(45) Date de publication et mention de la délivrance du brevet: **12.06.2019**
(21) Numéro de dépôt: 15817220.5
(22) Date de dépôt: 17.12.2015
(51) Int. Cl.: F42B 3/04, B60R 21/264, F42B 3/12, F42B 3/198

(54) **ETUI D'ALLUMEUR**
ZÜNDERGEHÄUSE
IGNITER CASE

(30) Priorité: 22.12.2014 FR 1463129
(43) Date de publication de la demande: 01.11.2017
(73) Titulaire: Autoliv Development AB, 447 83 Vårgårda (SE)
(72) Inventeur: BOUTIN, Patrice, 95150 Taverny (FR); REINOSO, Jose, 93600 Aulnay sous Bois (FR)
(74) Mandataire: Poindron, Cyrille
(86) Numéro de dépôt international: PCT/EP2015/080191
(87) Numéro de publication internationale: WO 2016/102293

(56) Documents cités:
- WO-A1-02/08028
- FR-A1- 2 877 082

## Description

La présente invention concerne de manière générale les allumeurs pyrotechniques pouvant être utilisés dans différent dispositifs pyrotechniques notamment assemblés dans les véhicules automobiles et plus particulièrement les étuis métalliques utilisés dans ces allumeurs et leur méthode de fabrication.

Il est connu dans l'art antérieur des allumeurs pyrotechniques comprenant un étui formé d'une paroi latérale comprenant une zone incurvée et au moins une zone de faiblesse, comme le divulgue le document US2009179408.

La zone de faiblesse forme un évent sur la paroi latérale pour libérer des gaz et matières pyrotechniques. Cette zone de faiblesse prend la forme d'une réduction locale de l'épaisseur de la paroi latérale. L'épaisseur de matière restante permet à l'évent de s'ouvrir à une pression inférieure à la pression de rupture de la paroi latérale lorsque l'intérieur de l'étui est soumis à une pression.

La précision de cette réduction d'épaisseur est essentielle pour garantir un fonctionnement répétable et reproductible entre les allumeurs fabriqués et donc des dispositifs dans lesquels ils sont positionnés. Un défaut dans la réalisation de la zone de faiblesse peut engendrer une mauvaise ouverture de l'évent qui peut entrainer une détérioration de l'étui et un dysfonctionnement du dispositif dans lequel il est positionné.

Pour garantir une bonne réalisation de la zone de faiblesse, il est connu de former, sur la surface latérale de l'allumeur et préalablement à la réalisation de la zone de faiblesse, une zone plane suffisamment grande pour recevoir ultérieurement dans la fabrication de l'étui, la zone de faiblesse. La frappe sur une zone plane permet d'atteindre les tolérances requises quant à l'épaisseur de matière restante en fond de zone de faiblesse. De telles tolérances ne peuvent être atteintes sans une frappe de la zone de faiblesse sur une zone plane.

Cette manière de procéder fait qu'une étape de réalisation de zone plane est nécessaire, ce qui nécessite des outillages complémentaires et engendre des coûts de maintenance. En outre la zone plane réduit le volume utile interne de l'étui. Enfin, la réalisation de la zone plane engendre des déformations de la surface extérieure de l'étui. Ces déformations sont gênantes,
- pour le positionnement ultérieur d'un capuchon plastique externe qui sert généralement à isoler électriquement l'étui de l'allumeur de l'environnement extérieur à l'allumeur,
- lors de l'insertion d'une traversée de verre qui vient fermer l'allumeur,
- lors de la soudure de l'étui sur la traversée de verre et,
- lorsque l'allumeur reçoit un surmoulage puisque l'outillage doit alors être défini au plus juste de l'allumeur. Enfin, les documents FR2877082 et WO02/08028 décrivent des allumeurs avec un étui qui comprend une zone de faiblesse sur une paroi et pouvant être formée par estampage.

Un but de la présente invention est de répondre aux inconvénients de l'art antérieur mentionné ci-dessus, et en particulier, tout d'abord, de proposer une méthode de fabrication rapide d'un étui d'allumeur pyrotechnique.

Pour cela un premier aspect de l'invention concerne un procédé de fabrication d'un étui métallique d'un allumeur pyrotechnique comprenant une paroi comportant au moins une zone de faiblesse et une surface intérieure à l'étui avec au moins une partie en regard de ladite au moins une zone de faiblesse,
le procédé de fabrication comprenant les étapes consistant à :
- positionner l'étui sur une matrice comprenant une zone plane,
- frapper la paroi avec au moins un poinçon, de sorte à, dans un même mouvement de frappe :
   - déformer au moins la partie de la surface intérieure en regard de ladite au moins une zone de faiblesse et comprenant au moins une zone initialement incurvée, pour l'amener sur ladite zone plane, et former ainsi une surface intérieure plane, et
   - former ladite au moins une zone de faiblesse.

Le procédé est simplifié car il ne nécessite plus d'étape de réalisation d'une zone plane sur l'étui préalablement à la frappe de la zone de faiblesse puisque le procédé réalise ces deux opérations dans un même mouvement de frappe. De plus, cela permet de limiter les déformations générées par la frappe de la zone de faiblesse sur la paroi de l'étui tout en permettant de former une zone de faiblesse précise et reproductible. En effet, à chaque étape de frappe, doivent être pris en compte des jeux entre la pièce à réaliser et la matrice. Ces jeux doivent être absorbés par la pièce à réaliser. Ainsi toute suppression d'étape supprime des jeux et limite donc les déformations non souhaitées. On peut également noter que les déformations plastiques sont imposées en une seule fois, ce qui limite la variabilité sur l'écrouissage total de la matière.

La zone de faiblesse positionnée sur la paroi est agencée pour rompre à une pression prédéterminée inférieure à une pression de rupture de ladite paroi.

Avantageusement, la paroi est une paroi latérale.

Le procédé est plus favorable à la réalisation d'une zone de faiblesse sur une paroi latérale que sur une extrémité car pour une frappe latérale, plus de jeux de positionnement de l'étui sur la matrice sont nécessaires. La suppression d'une étape est donc encore plus intéressante.

Avantageusement, l'étui est une pièce réalisée par un procédé de mise en forme à froid tel que l'emboutissage. L'étui peut être formé en acier doux nickelé tel que du DC04 ou du DC06 normalisés par la norme NF-EN-10130.

L'étui étant embouti, avant la formation de la zone de faiblesse, la surface extérieure à l'étui et la surface intérieure à l'étui sont parallèles selon des tolérances d'emboutissage connues. Ainsi, la surface extérieure en vis-à-vis d'une surface intérieure présentant une zone incurvée présente, elle aussi, une zone incurvée.

Avantageusement, la paroi est agencée de sorte à définir un volume de chargement et ladite au moins une zone de faiblesse définit un évent, le procédé étant caractérisé en ce que l'étape consistant à déformer au moins la partie de la surface intérieure en regard de ladite au moins une zone de faiblesse et comprenant au moins une zone initialement incurvée, laisse au moins une partie de l'évent incurvée de sorte à maximiser le volume de chargement.

Le procédé ne déformant que les surfaces nécessaires à la mise en forme de la zone de faiblesse, il limite au minimum les déformations de la paroi ce qui limite l'impact de la réalisation de la zone de faiblesse sur l'environnement extérieur de l'étui. L'ajout de composants tels qu'un capuchon de protection ou l'application de procédés ultérieurs tel qu'une insertion d'une traversée de verre et une soudure de l'étui sur la traversée de verre sont donc facilités. En d'autres termes, seule la portion de la paroi destinée à recevoir la zone de faiblesse est déformée (aplanie), et si la zone de faiblesse forme une ligne en arc de cercle, alors la portion de la paroi située dans cet arc de cercle restera au moins partiellement incurvée.

Avantageusement, ladite paroi est une paroi latérale de l'étui, le procédé comprenant une étape consistant à éjecter l'étui de la matrice selon un axe d'éjection de l'étui après l'étape de frappe, et dans lequel l'étape de formation de la surface intérieure plane comprend une étape consistant à former la surface intérieure plane avec un angle de dépouille par rapport à la direction d'extraction.

L'angle de dépouille peut être compris entre 0 et 1° et avantageusement compris entre 0 et 0.5°, bornes comprises.

Avantageusement, le procédé est caractérisé en ce que l'étape consistant à frapper la paroi latérale avec au moins un poinçon permet de former simultanément deux, trois ou quatre zones de faiblesse.

Avantageusement, la paroi comporte une surface extérieure à l'étui, ladite au moins une zone de faiblesse étant définie par un profil s'étendant le long d'une ligne courbe comprise dans un plan, l'étape consistant à frapper la paroi comprend une étape consistant à déformer au moins une partie initialement incurvée de ladite surface extérieure pour l'amener dans ledit plan et former ladite au moins une zone de faiblesse.

Le fait de former simultanément une surface intérieure plane et une zone de faiblesse définie par un profil s'étendant le long d'une ligne courbe comprise dans un plan permet de garantir une pression de rupture prédéterminée de la zone de faiblesse maitrisée et reproductible. En effet, il est plus simple et facile de réaliser et régler des outillages dont les surfaces de frappe sont planes. Les surfaces de frappes étant plus faciles à réaliser, les zones de faiblesses d'étuis fabriqués par des outillages différents sont plus similaires deux à deux et la population de la production est moins dispersée.

Avantageusement, l'étape de déformation de ladite au moins une partie de la surface extérieure est une étape consistant à imposer un angle non nul entre le plan de la surface extérieure et la surface intérieure plane.

La combinaison de l'angle non nul entre le plan de la surface extérieure et la surface intérieure plane permet de maitriser l'endroit de la paroi ou la distance sera la plus faible entre la surface intérieure plane et le plan de la surface extérieure. C'est à cet endroit que la résistance à la rupture de la zone de faiblesse sera la plus faible. Cela permet donc d'assurer une ouverture maitrisée et reproductible de l'étui lorsqu'il est soumis à une pression supérieure à de la pression de rupture prédéterminée de la zone de faiblesse.

Un second aspect de l'invention concerne un étui métallique d'un allumeur pyrotechnique fabriqué selon le procédé du premier aspect de l'invention.

Avantageusement l'étui métallique comprend
- une paroi agencée pour définir un volume de chargement,
- au moins une zone de faiblesse définie par un profil s'étendant le long d'une ligne courbe positionnée sur la paroi, agencée pour rompre à une pression prédéterminée inférieure à une pression de rupture de la paroi,
- ladite au moins une zone de faiblesse défini un évent,
caractérisé en ce que ladite ligne courbe est contenue dans un plan,
et en ce que au moins une portion de l'évent est incurvée de sorte à maximiser le volume de chargement. En d'autres termes, l'évent présente une surface intérieure et une surface extérieure, et au moins une partie de la surface intérieure de l'évent est incurvée (donc également la surface extérieure de l'évent aussi).

Avantageusement, l'étui comprend un fond et la paroi est latérale.

Avantageusement, la paroi est latérale et est cylindrique à base circulaire suivant un axe et comprend deux, trois ou quatre zones de faiblesse régulièrement réparties autour de l'axe.

Une répartition régulière permet d'éviter de d'équilibrer l'allumeur comprenant l'étui lors de son fonctionnement.

Un troisième aspect de l'invention concerne un allumeur pyrotechnique comprenant un étui selon le deuxième aspect de l'invention et une traversée de verre, l'étui étant soudé sur la traversée de verre.

Avantageusement, l'allumeur pyrotechnique comprend en outre un capuchon isolant et/ou un surmoulage.

Un quatrième aspect de l'invention concerne un générateur de gaz comprenant au moins un allumeur pyrotechnique selon le troisième aspect de l'invention.

Un cinquième aspect de l'invention concerne un véhicule automobile comprenant au moins un allumeur pyrotechnique selon le troisième aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de côté d'un allumeur pyrotechnique selon le troisième aspect de l'invention, fabriqué avec le procédé selon le premier aspect de l'invention ;
- la figure 2 représente une vue de détail d'une section de l'étui de l'allumeur pyrotechnique de la figure 1 suivant l'axe B-B ;
- la figure 3 représente une section de l'étui de l'allumeur de la figure 1 d'une étape du procédé selon le premier aspect de l'invention ;
- la figure 4 représente une section rabattue au niveau d'une partie d'une zone de faiblesse d'une étape du procédé selon le premier aspect de l'invention suivant le segment H-H représenté à la figure 1.

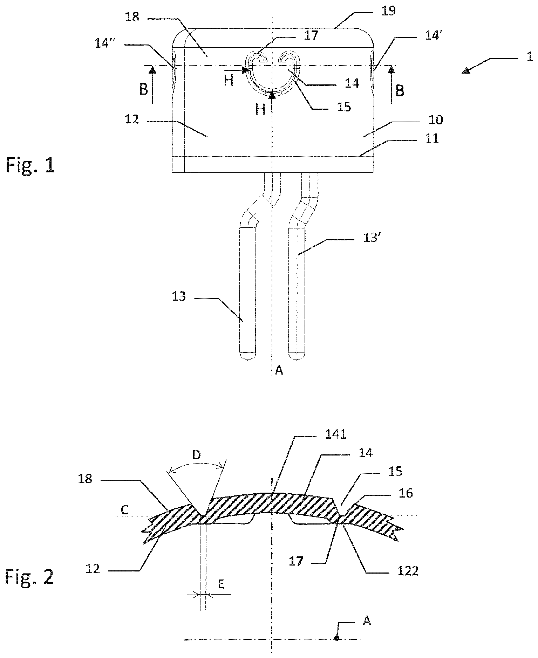

La figure 1 représente une vue de côté d'un allumeur pyrotechnique 1 comprenant un étui 10 soudé par un cordon de soudure 11 à une traversée de verre munie de deux broches de connexion 13 et 13'.

L'étui présente une paroi 12 latérale de forme généralement cylindrique à base circulaire d'axe A et comprend un fond 19. La paroi 12 latérale de l'étui 10 comprend trois évents 14, 14', 14" visibles et un quatrième non visible sur la figure, diamétralement opposé à l'évent 14. Les quatre évents sont régulièrement répartis autour de l'axe A. Une répartition régulière permet d'équilibrer les efforts de frappe lorsque plusieurs évents sont frappés simultanément et permet d'éviter de déséquilibrer l'allumeur 1 lors de son fonctionnement.

L'étui 10 peut être mis en forme par un procédé de frappe à froid tel que de l'emboutissage à partir d'un feuillard en acier doux nickelé tel que du DC04 ou du DC06. Il présente une épaisseur comprise entre 0.3 et 0.6mm et avantageusement comprise entre 0.35 et 0.5mm, bornes comprises.

Préférentiellement, le diamètre extérieur de l'étui est supérieur à 7mm, avantageusement supérieur à 10mm et préférentiellement compris entre 12 et 15mm, bornes comprises.

Les évents 14, 14', 14" sont définis par quatre zones de faiblesse 15 qui sont des réductions locales de l'épaisseur de la paroi 12 latérale. Ces zones de faiblesse 15 sont définies par un profil 16 visible sur la figure 2 et détaillé ultérieurement qui s'étend le long d'une ligne courbe 17. La ligne courbe 17 présente une forme en U dont les deux extrémités sont rabattues vers l'intérieur du U de sorte à former une zone de charnière qui permettra aux évents 14, 14', 14" de rester solidaires de la paroi 12 latérale de l'étui 10 lorsqu'ils s'ouvriront.

En effet, suite à la mise feu de l'allumeur 1 via les broches de connexion 13 et 13' par l'envoi d'une impulsion électrique du calculateur de la voiture dans laquelle l'allumeur 1 est embarqué, la combustion de la matière pyrotechnique contenue à l'intérieur de l'étui 10 entraine une augmentation de pression dans l'allumeur 1. La réduction d'épaisseur de l'étui 10 au niveau des zones de faiblesse 15 font que les évents 14, 14', 14" vont s'ouvrir à une pression prédéterminée, définie entre autre par l'épaisseur de matière restante et la matière de l'étui, la pression prédéterminée étant inférieure à la pression de rupture de l'étui 10 s'il ne présentait pas les zones de faiblesse 15.

Cela permet une ouverture maîtrisée des évents 14, 14', 14" qui permet de ne libérer les gaz de combustion qu'à la pression souhaitée tout en garantissant l'intégrité de l'allumeur 1 lors de son fonctionnement. Cette intégrité est importante et permet d'assurer que des particules de l'allumeur 1 ne viendront pas interférer avec le fonctionnement du dispositif dans lequel il est monté.

La figure 2 représente une vue de détail de l'évent 14 selon une section de l'étui de l'allumeur pyrotechnique de la figure 1 suivant l'axe B-B. positionné au niveau des évents 14, 14', 14".

Le profil 16 des zones de faiblesse 15 est triangulaire avec une pointe tronquée en fond de zone de faiblesse 15. Avantageusement, l'angle d'ouverture D des zones de faiblesse 15 est compris entre 50 et 70 degrés et est préférentiellement de 60 degrés. La largeur de la pointe tronquée E du profil 16 est comprise entre 0.1 et 0.2mm. La zone tronquée est comprise dans un plan C.

L'épaisseur de matière restante en fond de zone de faiblesse 15, entre le plan C et une surface plane 122 de l'étui 10 est comprise entre 0.05 et 0.2mm et préférentiellement entre 0.07 et 0.15mm.

Il est important de remarquer que l'évent 14 présente une surface 141 (comprise entre les deux profils 16 de la figure 2) qui est incurvée et sensiblement cylindrique. Cela permet de maximiser le volume intérieur de l'étui 10.

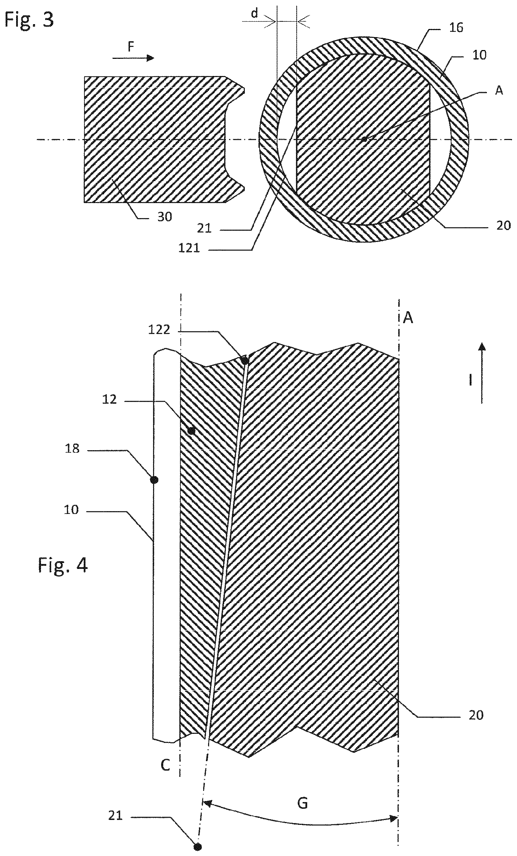

La figure 3 représente une section de l'étui 10 au cours d'une étape du procédé selon le premier aspect de l'invention. L'étui 10 est positionné sur une matrice 20 comprenant une zone plane 21. La partie de la surface intérieure 121 de la paroi 12, comprenant au moins une zone incurvée, en regard de ladite au moins une zone de faiblesse 15 est positionnée, suivant la direction de frappe F, entre la zone plane 21 de la matrice 20 et la forme complémentaire de la zone de faiblesse 15 présente sur un poinçon 30.

L'étui présentant une surface extérieure 18 latérale de forme généralement cylindrique à base circulaire d'axe A, il existe une distance maximum d entre la surface intérieure 121 de l'étui 10 et la zone de plane 21. La distance d sera ajustée, en fonction des dimensions de la zone de faiblesse 15 à réaliser, pour être la plus faible possible afin de réduire les déformations de l'étui 10 au minimum lors de la frappe et ainsi maximiser le volume intérieur de l'étui 10. A titre d'exemple, pour une zone de faiblesse 15 comprise dans un rectangle de 3mm par 5mm (5mm étant la dimension suivant la direction générale des broches 13 et 13') à frapper sur un étui 10 de 11.7mm de diamètre intérieur, la distance d sera de 0.4mm.

Le procédé selon l'invention propose donc de frapper directement l'étui 10 complétement cylindrique, pour former la zone de faiblesse 15, c'est-à-dire avec un profil 16 ayant une pointe tronquée qui s'étend dans le plan C, et avec également une surface intérieure 122 qui est plane. L'étape de frappe forme donc simultanément le profil 16, le plan C et la surface intérieure 122 plane, tout en laissant la surface 141 de l'évent 14 incurvée.

La figure 4 représente une section rabattue au niveau d'une partie d'une zone de faiblesse 15, après que la zone de faiblesse ait été frappée sur la paroi 12 selon le procédé selon l'invention et avant l'éjection de l'étui 10 de la matrice 20.

La zone plane 21 de la matrice 20 présente un angle de dépouille G avec la direction d'extraction I de l'étui 10. Dans ce mode de réalisation, la direction d'extraction I est parallèle à l'axe A de l'étui 10 et orientée dans la direction opposée des broches 13 et 13' non représentées. L'angle de dépouille pourra être compris entre 0 et 1° et avantageusement compris entre 0 et 0.5°, bornes comprises.

Cet angle de dépouille G fait que la distance entre le plan C de la surface extérieure 18 et la surface intérieure plane 122 peut varier selon la forme de la ligne courbe 17 et de la courbure de la surface intérieure 121. Ainsi selon ce mode réalisation de la zone de faiblesse 15 présenté à la figure 1, l'angle de dépouille permettra de garantir que la distance la plus faible entre le plan C de la surface extérieure 18 et la surface intérieure plane 122 se trouvera dans la zone inférieure du U, dans la zone la plus proche des broches 13 et 13'. C'est donc cette zone inférieure de la zone de faiblesse 15 qui sera la moins résistante à une pression présente à l'intérieur de l'étui 10. Ainsi, il est garanti que les évents 14, 14', 14" commenceront à s'ouvrir dans ces zones inférieures, la déchirure se propagera ensuite le long de la ligne courbe 17. Cela améliore la reproductibilité de fonctionnement des allumeurs fabriqués. En outre, dans la mesure où le reste de la zone de faiblesse 15 présente une épaisseur entre le plan C et la surface intérieure plane 122 plus importante, cela permet de ralentir la propagation de la déchirure lors de l'ouverture des évents 14, 14', 14" et assure que ces évents 14, 14', 14" restent liés au reste de la paroi 12 après le fonctionnement de l'allumeur.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé de fabrication d'un étui (10) métallique d'un allumeur pyrotechnique (1) comprenant une paroi (12) comportant au moins une zone de faiblesse (15) et une surface intérieure (121) à l'étui (10) avec au moins une partie en regard de ladite au moins une zone de faiblesse (15),
le procédé de fabrication comprenant les étapes consistant à :
- positionner l'étui (10) sur une matrice (20) comprenant une zone plane (21),
- frapper la paroi (12) avec au moins un poinçon (30), de sorte à, dans un même mouvement de frappe :
- déformer au moins la partie de la surface intérieure (121) en regard de ladite au moins une zone de faiblesse (15) et comprenant au moins une zone initialement incurvée, pour l'amener sur ladite zone plane, et former ainsi une surface intérieure plane (122), et
- former ladite au moins une zone de faiblesse (15).

2. Procédé suivant la revendication précédente,
la paroi (12) étant agencée l'étui (10) comprenant en outre un fond (19) de sorte à définir un volume de chargement et ladite au moins une zone de faiblesse (15) définissant un évent (14, 14', 14'"),
le procédé étant **caractérisé en ce que** l'étape consistant à déformer au moins la partie de la surface intérieure (121) en regard de ladite au moins une zone de faiblesse (15) et comprenant au moins une zone initialement incurvée, laisse au moins une partie de l'évent (14, 14', 14"') incurvée de sorte à maximiser le volume de chargement.

3. Procédé suivant l'une des revendications précédente,
ladite paroi (12) étant une paroi latérale de l'étui (10) métallique,
le procédé comprenant une étape consistant à éjecter l'étui (10) de la matrice (20) selon un axe d'éjection de l'étui après l'étape de frappe, et dans lequel l'étape de formation de la surface intérieure plane (122) comprend une étape consistant à former la surface intérieure plane (122) avec un angle de dépouille (G) par rapport à la direction d'extraction.

4. Procédé suivant la revendication précédente,
**caractérisé en ce que** l'étape consistant à frapper la paroi (12) latérale avec au moins un poinçon (30) permet de former simultanément deux, trois ou quatre zones de faiblesse (15).

5. Procédé suivant l'une des revendications précédentes,
ladite paroi (12) comportant une surface extérieure (18) à l'étui (10),
ladite au moins une zone de faiblesse (15) étant définie par un profil (16) s'étendant le long d'une ligne courbe (17) comprise dans un plan (C),
dans lequel l'étape consistant à frapper la paroi (12) comprend une étape consistant à déformer au moins une partie initialement incurvée de ladite surface extérieure (18) pour l'amener dans ledit plan (C) et former ladite au moins une zone de faiblesse (15).

6. Procédé suivant la revendication précédente,
dans lequel l'étape de déformation de ladite au moins une partie de la surface extérieure (18) initialement incurvée est une étape consistant à imposer un angle non nul entre le plan (C) de la surface extérieure (18) et la surface intérieure plane (122).

7. Etui (10) métallique d'un allumeur pyrotechnique (1) comprenant :
- une paroi (12) agencée pour définir un volume de chargement,
- au moins une zone de faiblesse (15) définie par un profil (16) s'étendant le long d'une ligne courbe (17) positionnée sur la paroi (12), agencée pour rompre à une pression prédéterminée inférieure à une pression de rupture de la paroi (12),
- ladite au moins une zone de faiblesse (15) définissant un évent (14), **caractérisé en ce que** ladite ligne courbe (17) est contenue dans un plan (C), et **en ce que** au moins une portion de l'évent (14) est incurvée de sorte à maximiser le volume de chargement.

8. Etui (10) métallique d'un allumeur pyrotechnique (1) selon la revendication précédente dont la paroi (12) est latérale et cylindrique à base circulaire suivant un axe (A) et comprend deux, trois ou quatre zones de faiblesse (15) régulièrement réparties autour de l'axe (A).

9. Allumeur pyrotechnique (1) comprenant un étui (10) selon l'une des revendications 7 ou 8 et une traversée de verre, l'étui (10) étant soudé sur la traversée de verre.

10. Allumeur pyrotechnique (1) selon la revendication précédente comprenant en outre un capuchon isolant et/ou un surmoulage.

11. Générateur de gaz comprenant au moins un allumeur pyrotechnique (1) selon l'une des revendications 9 ou 10.

12. Véhicule automobile comprenant au moins un allumeur pyrotechnique (1) selon l'une des revendications 9 ou 10.

## Patentansprüche

1. Verfahren zur Herstellung eines Metallgehäuses (10) eines pyrotechnischen Zünders (1), umfassend eine Wand (12) mit mindestens einem Schwächungsbereich (15) und einer Innenfläche (121) an dem Gehäuse (10) mit mindestens einem Abschnitt, der dem mindestens einen Schwächungsbereich (15) zugewandt ist,
wobei das Herstellungsverfahren die folgenden Schritte umfasst:
- Anordnen des Gehäuses (10) auf einer Matrize (20) mit einem ebenen Bereich (21),
- Schlagen auf die Wand (12) mit mindestens einem Stempel (30), so dass bei derselben Schlagbewegung:
- mindestens der Abschnitt der Innenfläche (121), der dem mindestens einen Schwächungsbereich (15) zugewandt ist und mindestens einen anfänglich gekrümmten Bereich umfasst, verformt wird, um ihn auf den ebenen Bereich zu bringen und dadurch eine ebene Innenfläche (122) zu bilden, und
- der mindestens eine Schwächungsbereich (15) ausgebildet wird.

2. Verfahren nach dem vorangegangenen Anspruch,
wobei die an dem Gehäuse (10) angeordnete Wand (12) ferner einen Boden (19) umfasst, um ein Ladevolumen zu definieren, und der mindestens eine Schwächungsbereich (15) eine Entlüftung (14, 14', 14"') definiert,
wobei das Verfahren **dadurch gekennzeichnet ist, dass** bei dem Schritt des Verformens mindestens des Abschnitts der Innenfläche (121), der dem mindestens einen Schwächungsbereich (15) zugewandt ist und mindestens einen anfänglich gekrümmten Bereich umfasst, mindestens ein Abschnitt der Entlüftung (14, 14', 14"') gekrümmt bleibt, um das Ladevolumen zu maximieren.

3. Verfahren nach einem der vorangegangenen Ansprüche,
wobei die Wand (12) eine Seitenwand des Metallgehäuses (10) ist,
wobei das Verfahren einen Schritt des Auswerfens des Gehäuses (10) aus der Matrize (20) entlang einer Auswurfachse des Gehäuses nach dem Schritt des Aufschlagens umfasst, und wobei der Schritt des Bildens der ebenen Innenfläche (122) einen Schritt des Bildens der ebenen Innenfläche (122) mit einem Hinterschnitt (G) in Bezug auf die Entnahmerichtung umfasst.

4. Verfahren nach dem vorangegangenen Anspruch,
**dadurch gekennzeichnet, dass** der Schritt des Schlagens auf die Seitenwand (12) mit mindestens einem Stempel (30) gleichzeitig das Bilden von zwei, drei oder vier Schwächungsbereichen (15) ermöglicht.

5. Verfahren nach einem der vorangegangenen Ansprüche,
wobei die Wand (12) eine Außenfläche (18) an dem Gehäuse (10) aufweist,
wobei der mindestens eine Schwächungsbereich (15) durch ein Profil (16) definiert ist, das sich entlang einer in einer Ebene (C) enthaltenen gekrümmten Linie (17) erstreckt,
wobei der Schritt des Schlagens auf die Wand (12) einen Schritt zum Verformen mindestens eines anfänglich gekrümmten Abschnitts der Außenfläche (18) umfasst, um ihn in die Ebene (C) zu bringen und den mindestens einen Schwächungsbereich (15) zu bilden.

6. Verfahren nach dem vorangegangenen Anspruch,
wobei der Schritt des Verformens des mindestens einen Abschnitts der anfänglich gekrümmten Außenfläche (18) ein Schritt des Vorsehens eines Winkels, der nicht Null ist, zwischen der Ebene (C) der Außenfläche (18) und der ebenen Innenfläche (122) ist.

7. Metallgehäuse (10) eines pyrotechnischen Zünders (1), umfassend:
- eine Wand (12), die derart angeordnet ist, dass sie ein Ladevolumen definiert,
- mindestens einen Schwächungsbereich (15), der durch ein Profil (16) definiert ist, das sich entlang einer an der Wand (12) angeordneten gekrümmten Linie (17) erstreckt, um bei einem vorbestimmten Druck, der niedriger als ein Berstdruck der Wand (12) ist, zu brechen,
- wobei der mindestens eine Schwächungsbereich (15) eine Entlüftung (14) definiert, **dadurch gekennzeichnet, dass** die gekrümmte Linie (17) in einer Ebene (C) enthalten ist **und dass** mindestens ein Abschnitt der Entlüftung (14) gekrümmt ist, um das Ladevolumen zu maximieren.

8. Metallgehäuse (10) eines pyrotechnischen Zünders (1) nach dem vorangegangenen Anspruch, dessen Wand (12) seitlich und zylindrisch mit einer runden Basis entlang einer Achse (A) ist und zwei, drei oder vier Schwächungsbereiche (15) umfasst, die regelmäßig um die Achse (A) verteilt sind.

9. Pyrotechnischer Zünder (1) mit einem Gehäuse (10) nach einem der Ansprüche 7 oder 8 und einer Glasdurchführung, wobei das Gehäuse (10) mit der Glasdurchführung verschweißt ist.

10. Pyrotechnischer Zünder (1) nach dem vorangegangenen Anspruch, ferner umfassend eine Isolierkappe und/oder eine Überformung.

11. Gasgenerator mit mindestens einem pyrotechnischen Zünder (1) nach einem der Ansprüche 9 oder 10.

12. Kraftfahrzeug mit mindestens einem pyrotechnischen Zünder (1) nach einem der Ansprüche 9 oder 10.

## Claims

1. Process for manufacturing a metallic case (10) of a pyrotechnical igniter (1) comprising a wall (12) comprising at least one weakness zone (15) and an inner surface (121) in the case (10) with at least one part facing said at least one weakness zone (15), which manufacturing process consists in:
- positioning the case (10) on a die (20) comprising a plane zone (21),
- striking the wall (12) with at least one punch (30) in such a manner as to, in a single striking movement:
- deform at least the part of the inner surface (121) facing said at least one weakness zone (15) and comprise at least one initially curved zone in order to place it on said plane zone, and to form a plane inner surface (122) in this manner, and to
- form said at least one weakness zone (15).

2. The process according to the previous claim, wherein
when the wall (12) is designed, the case (10) furthermore comprises a bottom (19) in such a manner as to define a charging volume and said at least one weakness zone (15) defines a vent (14, 14', 14"'),
wherein the process is **characterized in that** the step consisting in deforming at least the part of the inner surface (121) facing said at least one weakness zone (15) and comprising at least one initially curved zone leaves at least a part of the vent (14, 14', 14'") curved so as to maximize the charging volume.

3. The process according to one of the previous claims, wherein
said wall (12) is a side wall of the metallic case (10), wherein
the process comprises a step consisting in ejecting the case (10) from the die (20) along an ejection axis of the case after the striking step, and wherein the step of the formation of the plane inner surface (122) comprises a step consisting in forming the plane inner surface (122) at a clearance angle (G) relative to the direction of extraction.

4. The process according to the previous claim,
**characterized in that** the step consisting in striking the side wall (12) with at least one punch (30) allows two, three or four weakness zones (15) to be simultaneously formed.

5. The process according to one of the previous claims, wherein
said wall (12) comprises an outer surface (18) of the case (10), said at least one weakness zone (15) is defined by a profile (16) extending along a curve line (17) comprised in a plane (C), wherein the step consisting in striking the wall (12) comprises a step consisting in deforming at least one initially curved part of said outer surface (18) in order to place it in said plane (C) and to form said at least one weakness zone (15).

6. The process according to the previous claim,
wherein the deformation step of said at least one part of the initially curved outer surface (18) is a step consisting in imposing an angle which is not zero between the plane (C) of the outer surface (18) and the plane inner surface (122).

7. Metallic case (10) of a pyrotechnical igniter (1) comprising:
- a wall (12) designed to define a charging volume,
- at least one weakness zone (15) defined by a profile (16) extending along a curved line (17) positioned on the wall (12), designed to break at a predetermined pressure lower than a rupture pressure of the wall (12),
- wherein said at least one weakness zone (15) defines a vent (14), **characterized in that** said curved line (17) is contained in a plane (C), and that at least a part of the vent (14) is curved in such a manner as to maximize the charging volume.

8. The metallic case (10) of a pyrotechnical igniter (1) according to the previous claim, of which the wall (12) is lateral and cylindrical with a circular base along an axis (A) and comprises two, three or four weakness zones (15) regularly spaced around the axis (A).

9. The pyrotechnical igniter (1) comprising a case (10) according to one of claims 7 or 8 and a glass traverse, which case (10) is welded onto the glass traverse.

10. The pyrotechnical igniter (1) according to the previous claim, also comprising an insulating hood and/or an overmoulding.

11. A gas generator comprising at least one pyrotechnical igniter (1) according to one of claims 9 or 10.

12. An automobile comprising at least one pyrotechnical igniter (1) according to one of claims 9 or 10.
